**Europäisches Patentamt**

(19) **European Patent Office**

**Office européen des brevets**

(11) Publication number : **0 329 248 B1**

(12) **EUROPEAN PATENT SPECIFICATION**

(45) Date of publication of patent specification :
29.04.92 Bulletin 92/18

(51) Int. Cl.⁵ : **A01J 7/00, G01S 15/88, G01S 15/87**

(21) Application number : **89200348.4**

(22) Date of filing : **14.02.89**

(54) **A device for milking an animal.**

(30) Priority : **16.02.88 NL 8800372**

(43) Date of publication of application :
**23.08.89 Bulletin 89/34**

(45) Publication of the grant of the patent :
**29.04.92 Bulletin 92/18**

(84) Designated Contracting States :
**DE FR GB NL**

(56) References cited :
**EP-A- 0 209 202**
**EP-A- 0 213 660**
**EP-A- 0 229 682**
**EP-A- 0 232 568**

(73) Proprietor : **C. van der Lely N.V.**
**Weverskade 10 P.O. Box 26**
**NL-3155 ZG Maasland (NL)**

(72) Inventor : **van den Berg, Karel**
**31, Meulenbroek**
**Bleskensgraaf (NL)**

(74) Representative : **Mulder, Herman et al**
**Octrooibureau Van der Lely N.V. Weverskade**
**10 P.O. Box 26**
**NL-3155 ZG Maasland (NL)**

EP 0 329 248 B1

## Description

The invention relates to a device for milking an animal, e.g. a cow, which device comprises means for establishing the position of a teat of the animal's udder with the object of connecting a teat cup thereto, which means include a sensor unit for establishing the distance to the animal's udder from a location below the teat.

In automatic milking devices the teat cups are moved to the teats and connected thereto by means of a robot arm, for which purpose the position of the teats has to be established as accurately as possible. Since the teats do not always remain in the same place and are found to change position at unexpected instants, it is of importance that such a position-finding of the teats is performed repeatedly, of course as long as this is possible, during moving of a teat cup towards a teat. For this purpose it is known from e.g EP-A-0 229 682, which discloses the features of the preamble of claim 1, to use a sensor unit which, just because from below the teats in general are the udder's most prominent portions, is capable of establishing the distance to the animal's udder from a location below the teats, in which connection the end of a teat is recognized by the fact that the distance thereto as perceived by the sensor unit is less than that to portions located near the said end of the teat.

For the same reason as that requiring a repeated position-finding of the teat, also the period of time required for moving the teat cup towards the teat, and hence the time available to the sensors for establishing the position, should be kept as short as possible. Therefore, the invention has for its object to provide a device of the above-defined type, by means of which device the position of a teat of an udder is established efficiently and rapidly in order that a teat cup can be connected thereto shortly thereafter.

According to the invention, the device is characterized in that the sensor unit comprises individual sensors, whereby the directions of the scanning beams transmitted by the individual sensors are variable relative to each other. Because of the fact that the directions of the scanning beams can be varied relative to each other, it is possible first to scan a comparatively large area of the udder and, after a fast and relatively coarse position-finding of a teat has been effected, then to scan a smaller area around the coarsely established teat position with the object of establishing this position more accurately.

In accordance with a further feature of the invention, the scanning beam directions can assume discrete angular values, in particular two different angular values, relative to a vertical. As a result thereof, at a fixed operating height of the sensors and at a predetermined width of the scanning beam, it is possible to scan rapidly various udder portions which are substantially defined as regards size. In an embodiment of the invention, a scanning of specific portions of the udder is obtained with the aid of adjusting means which, in a first position, cause the sensors to scan contiguous, not more than partially overlapping udder portions and, in a second position, substantially overlapping udder portions.

In the first position, the sensors can be moved relatively fast, together with the teat cup intended for the teat detected in this position, in a direction determined by the sensor whose scanning beam covers the udder portion comprising the detected teat, until the sensors together with the relevant teat cup have arrived in a position wherein the scanning beams, in the second position, cover an udder portion comprising this teat. In the second position, the sensors together with the relevant teat cup can then be readjusted more accurately from the location obtained in the first position to the position wherein the teat cup is located substantially straight under the location of the teat determined by the sensors in the second position. Thereafter, in this second position, any change in the location of the teat can be detected immediately, whereafter the sensors together with the teat cup can follow the change in position, so that the teat cup to be connected is kept continuously substantially under the relevant teat until it has been connected. At a relatively large and/or rapid change in the location of the teat, it may be necessary first to return the sensors to the first position in order to effect a coarse position-finding.

In accordance with a further feature of the invention, in their first position, the scanning beams of the sensors extend substantially parallel, e.g. substantially vertically upwards, whereas in their second position the scanning beams of the sensors are mutually converging, e.g. to an equal degree upwardly relative to a vertical. This provides a particularly efficient manner of scanning the animal's udder.

In a practical embodiment of the invention, the sensors are operative in a horizontal plane and, in the operative state, are preferably placed symmetrically around a teat cup to be connected. Furthermore, according to the invention, at least three sensors are present; in a practical embodiment, however, it will suffice to have e.g. three or four sensors.

In accordance with a still further feature of the invention, the sensors consist of a transceiver, which sensors transmit, preferably in a fixed sequence, pulse-shaped scanning signals which are shifted in time relative to each other. The sensors can then alternately transmit one or more, preferably ultrasonic, pulses. In order to prevent the scanning signals from interfering with each other, the time difference between the consecutively transmitted pulse-shaped scanning signals is more than twice the time difference corresponding to the distance to be detected to the animal's udder.

In addition, according to the invention, there is provided a sensor carrying unit comprising a housing for each sensor, in which housing the relevant sensor is arranged capably of tilting. On this sensor carrying unit there can also be provided the adjusting means which, in a first position, cause the sensors to scan contiguous, not more than partially overlapping udder portions and, in a second position, substantially overlapping udder portions. These adjusting means can be formed by a two-position-movable element provided for each sensor and connected thereto, as well as a circuit controlling these elements. Also in accordance with the invention, this advantageous embodiment renders it possible on the one hand to mount the sensor carrying unit so as to be capable of rotation relative to the robot arm, in which case the holder for the teat cups consecutively to be connected constitutes an integral whole with the robot arm or is rigidly connected thereto, whilst on the other hand there is the possibility to have the sensor carrying unit be a fixed part of a robot arm or be rigidly connected thereto and to mount the holder for the teat cups consecutively to be connected so as to be capable of rotation relative to this robot arm. Therefore, the invention also relates to a device for milking an animal, which device comprises means for establishing the position of a teat of the animal's udder with the object of connecting a teat cup thereto, which means include sensors, each of which is capable of establishing the distance to the animal's udder from a location below the teat, the said device being characterized in that the sensors are accommodated in a housing which is rigidly connected to a robot arm. Also in this embodiment, to allow of an efficient and rapid position-finding of a teat of the animal's udder, the sensors will be arranged tiltably in this housing, so that also here the directions of the scanning beams transmitted by the individual sensors are variable relative to each other.

In addition, according to the invention, the teat cups can remain in connection with the robot arm or the holder via a flexible connecting member, by means of which the teat cup is pulled to and up against a spot intended therefor in or against the holder, e.g. when the milking with the relevant teat cup has ended or when an effort to apply the teat cup to the relevant teat has failed. The flexible connecting member may consist of one or more cables, ropes or wires or of the tubes used for milking.

For a better understanding of the present invention and to show how the same may be carried into effect, reference will now be made, by way of example, to the accompanying drawings, in which:

Figure 1 is a side elevational view of a cow present in the milking parlour;

Figure 2 is a plan view of part of the frame and the robot arm present in the milking parlour;

Figure 3 is a partially cut-out, more detailed view of the end of the robot arm in a plan view;

Figure 4 is a longitudinal cross-sectional view of the arrangement of a teat cup at the end of the robot arm:

Figure 5 is a schematic view of the positioning of the teat cups during milking and their connection to the robot arm, and

Figures 6 and 7 show, in a schematic view, the arrangement of the sensors in their first and second position, respectively, relative to a teat cup to be connected and to the udder of the cow to be scanned, a teat of the udder being shown, for the sake of clarity, in an upwardly shifted position.

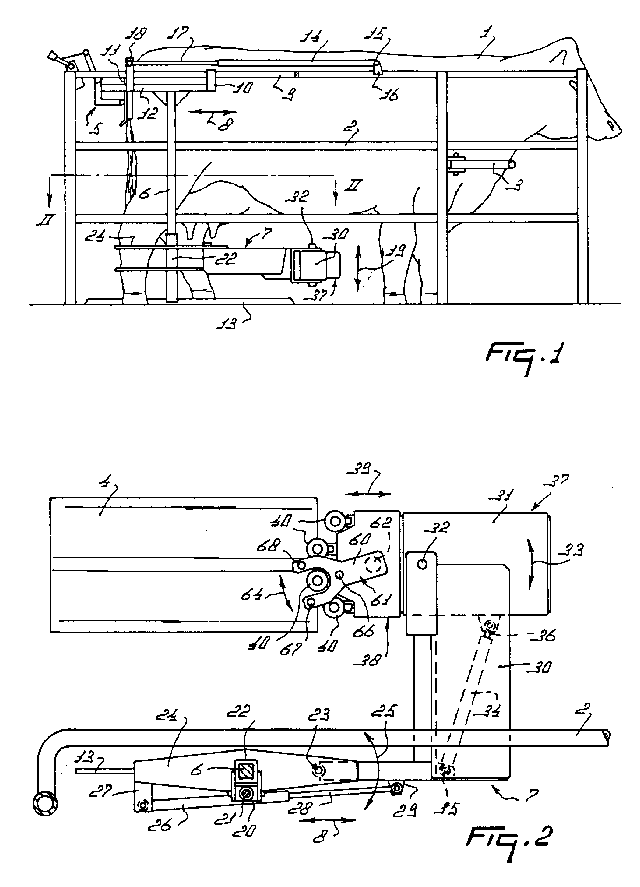

In the side view of the device of Figure 1 there is shown a cow 1 which is present in a milking parlour, the milking parlour being enclosed by a railing 2 which limits the freedom of movement of the animal 1 in a lateral direction. The milking parlour is entered by the animal from the rear, while a pivotal stop 3 is arranged near the front side, which stop 3 constitutes a boundary for the animal 1 in the forward direction. By providing the front side of the milking parlour with e.g. a feed unit, the animal will advance sufficiently far, i.e. until against the stop 3.

The milking parlour floor has a recess 4 which is arranged such that the animal will not put her hind feet thereon, e.g. because its bottom extends obliquely inwardly and downwardly, so that the hind legs of the animal are wide apart and on either side of the recess 4. The recess 4 may have a drain for discharging the animal's excrements, if any.

Once the animal has entered the milking parlour, a sensing device 5 is pivoted against her rear side. At the sides of the milking parlour there is arranged a substantially vertical frame beam 6, which frame beam 6 at its upper end is provided with a longitudinal guide means and to which near its lower end a robot arm 7 is fitted. The vertical frame beam 6 is capable of moving with respect to the milking parlour in the longitudinal direction as denoted by the arrows 8. For that purpose, the railing 2 is provided with a guide rod 9 along which can move two interconnected slide blocks 10 and 11, the said slide blocks 10 and 11 being interconnected by means of a horizontal frame beam 12 secured to the vertical frame beam 6. Near the floor, the frame beam 6 is guided by a guide rail 13, along which the lower portion of the frame beam 6 slides. This sliding movement in the longitudinal direction of the frame beams 6 and 12 is effected by means of an operating cylinder 14, the end 15 of which is connected to the railing 2 via a support 16 and the piston rod 17 of which is connected to a support 18 attached to the frame beam 12. It will be obvious that by operating the operating cylinder 14, which can be done both pneumatically and hydraulically, there is effected a shift of the frame beams 6 and 12 in the longitudinal direction.

As has already been stated in the foregoing, once the animal has entered the milking parlour, the sensing device 5 pivots against her rear side, thereby constituting the rear fence of the milking parlour. The sensing device 5 is connected pivotably to the frame beam 12. The control mechanism of the sensing device so operates the operating cylinder 14 that the frame beams 6 and 12 always remain approximately in the same position relative to the animal in the longitudinal direction.

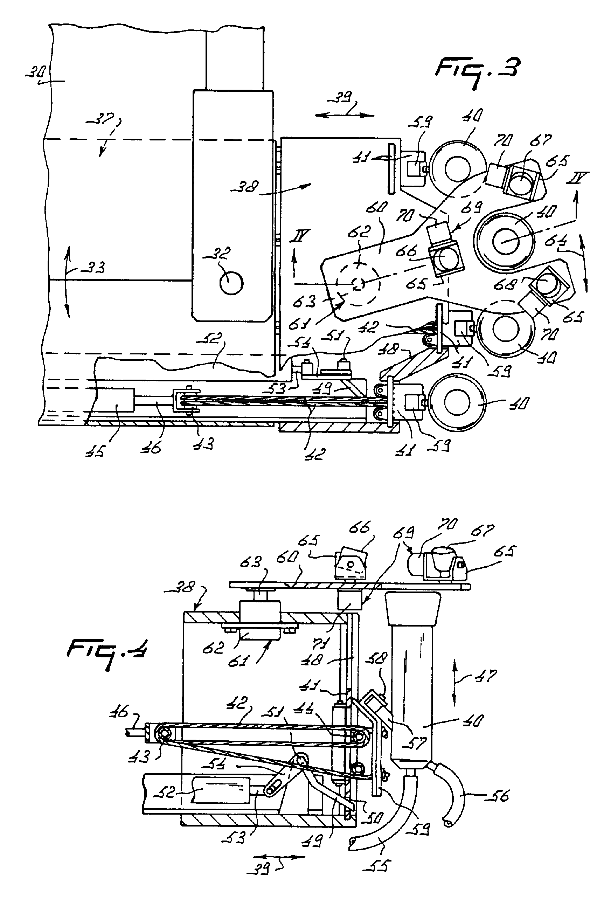

The robot arm 7 is connected slidably in height (arrows 19) to the frame beam 6. The sliding movement in height is effected by means of an operating cylinder 20 arranged along the frame beam 6 and having piston rod 21 (Figure 2), the one end of which is connected to the frame beams 6 and 12 in the place where the said frame beams are interconnected. The other end of the operating cylinder 20 is connected to a slide block 22 which is capable of moving in height along the frame beam 6 in dependence on the operation of the operating cylinder 20.

The robot arm 7 is connected capable of pivoting about a substantially vertical pivot pin 23 to a frame 24 which is attached to the slide block 22. This pivotal movement, which is indicated by arrows 25, is effected by means of an operating cylinder 26 which has one end connected to a support 27 of the frame 24. The piston rod 28 of the cylinder 26 is connected to a support 29 which is attached to the first portion 30 of the robot arm 7. It will be obvious that, by operating the operating cylinder 26, the robot arm 7 can be pivoted from the rest position to the operational position and vice versa. It may be of importance for the robot arm to be fixed under spring load, i.e. in such a manner that it can deflect when e.g. the animal kicks against it. In this embodiment, this can be achieved by constructing the operating cylinder 26 such that it can spring e.g. by pneumatic means.

The robot arm 7 consists of a first portion 30 and a second portion 31 which is connected capable of pivoting about a pivot pin 32 to the said first portion 30. The pivotal movement about the pivot pin 32 is indicated by arrows 33 and is effected by means of a cylinder 34 whose end 35 is attached to the first portion 30 of the robot arm 7 and whose piston rod 36 is connected to the second portion 31 of the robot arm 7. By means of the operating cylinder 26, the robot arm 7 can be moved to under the animal present in the milking parlour, the pivot pin 32 being in a central position under the animal, i.e. between the animal's legs. Thereafter, by operating the operating cylinder 34, the second portion 31 of the robot arm 7 can be pivoted about the pivot pin 32 at a desired angle.

The second portion 31 of the robot arm 7 consists of a portion 37 which is connected pivotably to the first portion 30 of the robot arm 7 and a portion 38 which is axially movable relative to the portion 37, as is indicated by the arrows 39.

The portion 37 is of a substantially hollow construction, so that, in the inserted condition, the portion 38 is partly within the portion 37. Between the mutually slidable portions 37 and 38 there is arranged an operating cylinder (not shown) which is connected to the portion 37 of the second portion 31 of the robot arm 7. The piston rod of this operating cylinder has its end connected to the portion 38 of the second portion 31 of the robot arm 7. The portions 37 and 38 are provided in a known per se manner with guide means which slidably engage each other and of which the one guide means is connected to the portion 37 and the other guide means to the portion 38.

A plurality of teat cups 40 can be arranged to the robot arm 7; these teat cups can be connected successively to the relevant teats of the animal's udder. Once a teat cup 40 has been moved in the manner to be described hereinafter to under the teat to which it must be connected, it is moved upwardly and a vacuum is produced therewithin, so that the teat cup sucks to the teat. Thereafter the teat cup 40 is released from the robot arm, so that this robot arm can move with the object of positioning a subsequent teat cup in the desired place. The following technical means are provided for performing these actions.

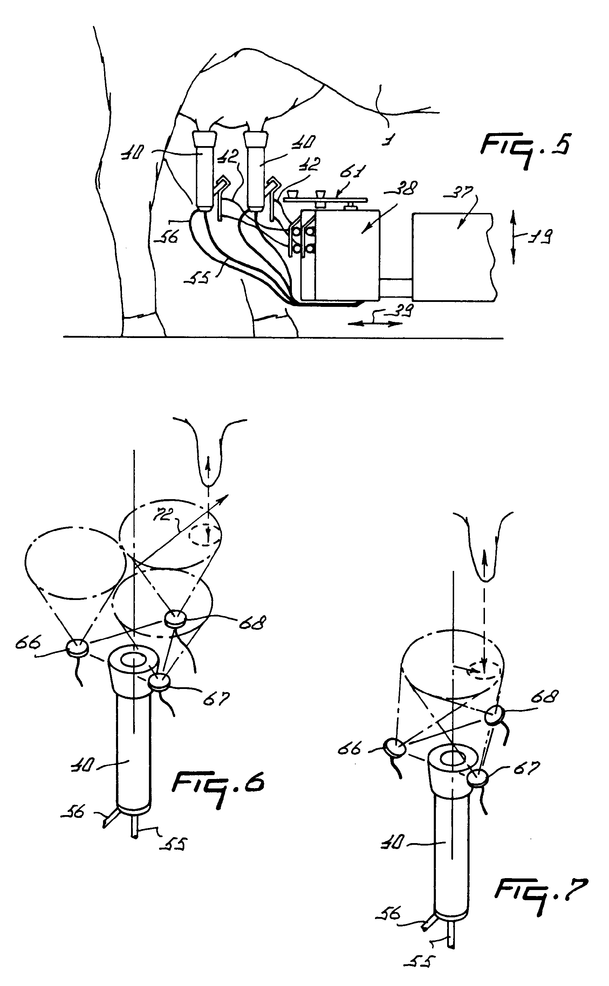

At the end of the robot arm 7 there are provided teat cup carriers 41 (Figures 3 and 4), each of which can carry a teat cup 40. The teat cup 40 is pulled against the teat cup carrier 41 by means of a flexible connecting member in the form of a cord 42. In the embodiment shown in Figures 3 and 4, the two ends of the cord 42 are connected to the teat cup 40, whilst from its end the cord is passed around a roller 43 and wrapped around a roller 44. The roller 44 is arranged in the slidable portion 38 of the robot arm 7, as is also an operating cylinder 45, whilst the roller 43 is connected to the end of the piston rod 46 of the said operating cylinder. It will be obvious that, when the piston rod 46 is retracted into the cylinder 45, this has as a result that the ends of the cord 42 are tightened, so that the teat cup 40 connected thereto is clamped against the teat cup carrier 41. However, when the operating cylinder 45 is operated in such a way that the piston rod 46 emerges therefrom, then the teat cup 40 is no longer clamped against the teat cup carrier 41 and it can move freely relative to the robot arm and be connected to a teat of the udder; this situation is shown in Figure 5. At any desired moment, e.g. when the milking procedure has ended or when for any other reason the teat cup is no longer connected to the teat, the teat cup 40 can be pulled up against the teat cup carrier 41 again by operating the operating cylinder 45. Since the teat cup 40 is connected to the cord 42 in two places, it will always be kept in the proper position against the teat cup carrier 41.

As is shown in Figure 4 by means of arrows 47, the teat cup carrier 41 together with the teat cup 40 is adapted to slide upwardly, the teat cup carrier 41 sliding in guide means 48. The upward movement is effected by a rod 49 which extends through an aperture 50 into the teat cup carrier 41 and by means of its other end is pivotal about a pivot pin 51. Owing to the pivotal movement of the rod 49 about the pivot pin 51, the teat cup carrier 41 is moved in the vertical direction in the guide means 48, thereby imparting an upward movement to the teat cup 40. This upward movement is effected by means of an operating cylinder 52 wherein a piston rod 53 can move axially, so that a lever 54 fitted to the end of the piston rod 53 pivots about the pivot pin 51 together with the rod 49. So as to enable a pivotal movement of the lever 54 about the pivot pin 51, the lever is provided at its portion connected to the end of the piston rod with a slotted aperture, the end of the piston rod 53 engaging this aperture.

The teat cup 40 shown in Figure 4 includes a milk hose 55 and a pulsating hose 56, the two of which are connected with the required clearance to the robot arm 7. The teat cup 40 is furthermore provided with a connecting arm 57 that is arranged pivotably about a pin 58 at a connection member 59. The connection member 59 is connected to the ends of the cord 42, so that this connection member 59 is pulled up against the teat cup carrier 41. It will be obvious that the teat cup 40 has some freedom of movement about the pin 58; optionally, this freedom of movement may be limited by applying spring-loaded means to keep the teat cup 40 in an approximately vertical position.

At the upper side of the slidable portion 38 of the second portion 31 of the robot arm 7 there is provided pivotably a sensor carrying unit 60. This sensor carrying unit 60 may be driven by a stepper motor 61, the housing 62 of which is connected rigidly to said slidable portion 38 and the rotor shaft 63 is connected to the sensor carrying unit.

The sensor carrying unit 60 is forked and can be rotated such by the stepper motor 61 in the direction indicated by the arrows 64 that the teat cups 40 to be connected sequentially to the teats of the udder arrive exactly under the recess in the bifurcate sensor carrying unit. The dimensions of this recess are such that a teat cup to be connected can move upwardly therebetween.

Sensors 66, 67 and 68, each in its own housing 65, are arranged on the sensor carrying unit 60. The housing 65 of each of the sensors is rigidly connecced to the sensor carrying unit. Inside their housings, the sensors are pivotal about a horizontal axis which extends perpendicularly to the line connecting the centre of the teat cup located exactly under the midway point of the recess of the bifurcate sensor carrying unit and the centres of the relevant sensors. The tilting of the sensors is effected by adjusting means 69, which means are formed by a two-position-movable element 70 provided for each sensor and connected thereto, as well as a circuit controlling these elements. In a first possible position of the sensors, the scanning beams of these sensors extend substantially vertically, whilst in their second position they are directed upwardly relative to a vertical and converge to an equal extent. The orientation of the scanning beams of the sensors in the first and second positions is shown schematically in Figures 6 and 7, respectively. When the robot arm 7 has been moved at the proper height to under the cow's udder and the sensors are in the first position, then the sensors scan udder portions which only partially overlap, whereby a relatively large udder surface area is covered and a rough indication can be obtained about the position of the teat relative to the teat cup to be connected. With the aid of known per se cow recognition systems, the robot arm can be positioned very rapidly under the udder in such a manner that a teat of the udder can be detected by at least one of the scanning beams. The sensor carrying unit carrying the teat cup intended for the teat detected in the first position of the sensors can now be moved relatively rapidly in a direction determined by the sensor whose scanning beam covers the udder portion containing the detected teat, until the sensors with the relevant teat cup have arrived in a position which is so close under the teat to which the teat cup is to be connected that the teat, when the sensors are pivoted to their second position, is covered by all three scanning beams. For, in this second position, the scanning beams of the sensors cover substantially overlapping udder portions. In this situation shown in Figure 7 it is possible, since all three sensors can observe the teat, to obtain an accurate position of the teat relative to the teat cup to be connected and , consequently, the robot arm can be moved such that the teat cup is positioned substantially straight under the teat to which this teat cup is to be connected. Even if the cow moves, the sensors will yet continue to determine the position of this moving teat relative to the teat cup, and the robot arm can continue to follow the movements of the teat. This teat-following procedure will be continued until the teat cup to be connected has been moved so far upwards in the direction of the teat that the sensors are no longer capable of determining the position of the teat relative to the teat cup.

Each of the sensors is constituted by a transceiver, which sensors transmit, in a fixed sequence, ultrasonic pulse-shaped scanning signals which are shifted in time relative to each other, the time difference between the consecutively transmitted pulse-shaped scanning signals being longer than twice the time difference corresponding to the distance to be detected to the animal's udder. By measuring the time difference between the transmission of the pulse-shaped scanning signals and reception of the corresponding scanning signals reflected from the udder, it is possible to determine the distance between the relevant sensors and the udder, the end of a teat being recognized because the distance detected by a sensor to the end of the teat is less than the detected distance to those udder portions that are located near the end of the teat. Since also the direction of the scanning beams of the individual sensors and the position of the individual sensors and the position of the sensors relative to the robot arm are known, it is possible to determine the position of a detected teat relative to a teat cup present under the sensor carrying unit and to be connected to the teat.

The illustrated embodiment of the device for milking an animal operates as follows.

After a cow has entered the milking parlour and has walked on until a further forward movement is limited by means appropriate thereto, e.g. a stop and/or a feeding arrangement, the sensing device 5 which initially is located at the side of the milking parlour is pivoted through approximately 90° by means of an operating cylinder, whereafter the sensing device moves towards the cow until it bears against her rear side and continues to bear thereon by means of control means, so that the frame 6, 13 carrying the robot arm 7 always remains in approximately the same position relative to the cow.

By means of a cow recognition system (not shown in the drawings), it is established which animal is present in the milking parlour and, by means of a data processing arrangement (computer) (not shown either in the drawings), further details about the relevant cow are known. For example, it is known how much time has elapsed since the last milking operation, so that the shape of the udder, which partly depends on the quantity of milk contained therein, is roughly known. On the basis of this information the robot arm 7 can be brought by means of the operating cylinder 20, 21 at a desired level, which level serves as the starting height for the search of the teats of the udder. Thereafter, by means of the operating cylinder 26, the robot arm 7 is pivoted to e.g. the position shown in Figure 2, so that the second portion 31 of the robot arm 7 is located under the cow. During this pivotal movement of the robot arm to under the cow, the frame beams 6 and 12 can be displaced additionally by the operating cylinder 14 so as to prevent the cow from being contacted by the robot arm during pivoting. On the basis of the said cow recognition information, the end of the robot arm, too, can be adjusted to the desired starting position by means of the cylinder 34 and the cylinder provided for sliding the portion 39 from the second portion 31 of the robot arm 7, at least one of the sensors which are in their first position detecting the teat of an udder. When, as is shown in Figure 6, a teat is detected within the scanning beam transmitted by the sensor 68, then the end of the robot arm 7 is moved in the direction of the arrow 72, i.e. in a direction determined by the sensor whose scanning beam covers the observed udder portion containing the teat. As here only a rough positioning of the teat relative to the sensor carrying unit and the teat cup to be connected is involved, this movement in the direction of the arrow 72 can be effected rapidly. When the teat has arrived near the centre line in the longitudinal direction of the teat cup, the sensors are adjusted to their second position in which the scanning beams of all three sensors cover the teats (Figure 7). From the information then obtained by the sensors the position of the teat relative to the teat cup can be determined accurately, and the end of the robot arm can follow continuously the movements of the teat, even during the major part of the upward movement of the teat cup. Thus, a reliable connection of the teat cup to the udder is strongly promoted. The actions described here are repeated until all the teat cups have been connected.

In the embodiment described, the control means for moving a teat cup to be connected to always substantially straight under a relevant teat and for keeping same in that position to the best possible extent during the upward movement are hydraulic means. Instead thereof, it is e.g. alternatively possible to use stepper motors. The control means may then include first adjusting means for moving the sensors together with the teat cup intended for the teat detected in the first position in relatively coarse steps in a direction determined by the sensor whose scanning beam covers the udder portion comprising the detected teat, until the sensors with the relevant teat cup have arrived in a position wherein the scanning beams can cover, in the second position, an udder portion including this teat. In addition, the control means may include second adjusting means for moving the sensors with the relevant teat cup from the position determined by the first adjusting means in comparatively fine steps to the position wherein the teat cup is substantially straight under the location of the teat determined by the sensors in the second position.

The invention is not limited to the embodiment illustrated in the drawings. Thus, the sensors may be operative in more than two positions and may even be continuously variable and it is not necessary for the scanning beams to be mutually parallel and/or directed vertically in the first position. Nor is it necessary for the sensors to be arranged symmetrically relative to a teat cup present under the sensor carrying unit, whilst the scanning beams need not be directed symmetrically relative to the centre line in the longitudinal direction of the teat cup. Also, the number of sensors is not limited to three. The plane wherein the sensors are located may deviate from the horizontal plane. However, it will be obvious that many of these modifications will lead to a more complicated programming of the computer.

## Claims

1. A device for milking an animal (1), which device comprises means for establishing the position of a teat of the animal's udder with the object of connecting a teat cup (40) thereto, which means include a sensor unit for establishing the distance to the animal's udder from a location below the teat, characterized in that the sensor unit comprises individual sensors (66, 67, 68) whereby the directions of the scanning beams transmitted by the individual sensors (66, 67, 68) are variable relative to each other.

2. A device as claimed in claim 1, characterized in that the scanning beam directions can assume discrete, preferable two, angular values relative to a vertical.

3. A device as claimed in claim 1 or 2, characterized in that there are provided adjusting means (69) which, in a first position, cause the sensors (66, 67, 68) to scan contiguous, not more than partly overlapping udder portions and, in a second position, substantially overlapping udder portions.

4. A device as claimed in claim 3, characterized in that there are provided control means for adjusting the sensors (66, 67, 68) together with a teat cup (40) intended for a teat detected in the first position to a position wherein the teat cup (40) is located substantially straight under the location of the teat determined by the sensors (66, 67, 68) in the second position.

5. A device as claimed in any one of the preceding claims, characterized in that the scanning beams of the sensors (66, 67, 68) extend substantially, preferably parallel, in a vertical upward direction in their first position, and in that the scanning beams of the sensors (66, 67, 68) are mutually converging in their second position.

6. A device as claimed in any one of the preceding claims, characterized in that in the operative state the sensors (66, 67, 68) are positioned in a horizontal plane and, preferably, symmetrically around a teat cup (40) to be connected.

7. A device as claimed in any one of the preceding claims, characterized in that at least three sensors (66, 67, 68) are provided.

8. A device as claimed in any one of the preceding claims, characterized in that each of the sensors (66, 67, 68) consists of a transceiver.

9. A device as claimed in claim 8, characterized in that the sensors (66, 67, 68) transmit ultrasonic pulse-modulated scanning signals which are shifted in time relative to each other.

10. A device as claimed in any one of the preceding claims, characterized in that there is provided a sensor carrying unit (60) comprising a housing for each sensor (66, 67, 68), in which housing (65) the relevant sensor is arranged capably of tilting.

11. A device as claimed in claim 10, characterized in that on the sensor carrying unit (60) there are provided adjusting means (69) which, in a first position, cause the sensors (66, 67, 68) to scan contiguous, not more than partly overlapping udder portions and, in a second position, substantially overlapping udder portions.

12. A device as claimed in claim 10 or 11, characterized in that the sensor carrying unit (60) forms part of or is rigidly connected to a robot arm (7).

13. A device for milking an animal, as claimed in any one of the claims 1 to 9, characterized in that the sensors (66, 67, 68) are arranged tiltably in a housing (65) which is rigidly connected to a robot arm (7).

14. A device as claimed in claim 12 or 13, characterized in that the teat cups (40) to be connected sequentially to the individual teats of the animal's udder are provided in a holder (41) which is arranged rotatably relative to the robot arm (7).

15. A device as claimed in claim 10 or 12, characterized in that the sensor carrying unit (60) is arranged rotatably relative to the robot arm (7).

16. A device as claimed in claim 14, characterized in that the teat cups (40) to be connected sequentially to the individual teats of the animal's udder are located in a holder (41) which forms an integral whole with the robot arm (7) or is rigidly connected thereto.

17. A device as claimed in claim 14 or 16, characterized in that each of the teat cups (40) is connected to the robot arm (7) or to the holder (41) by a flexible connecting member (42), such as a wire or rope, e.g. made of synthetic resin material and/or metal, which is capable of forming a flexible connection between the robot arm (7) and the holder (41), respectively, and the relevant teat cup (40) during milking and is capable of pulling the teat cup (40) upwards to the holder.

**Patentansprüche**

1. Vorrichtung zum Melken eines Tieres, mit einer Einrichtung zur Bestimmung der Position einer Zitze des Tiereuters zwecks Anlegen eines Zitzenbechers, wobei diese Einrichtung eine Sensoreinheit aufweist, die zur Bestimmung des Abstandes zwischen dem Tiereuter und einem Ort unterhalb der Zitze dient, dadurch gekennzeichnet, daß die Sensoreinheit individuelle Sensoren (66, 67, 68) enthält, wobei die Richtungen der Abtaststrahlen, die von den individuellen Sensoren (66, 67, 68) ausgesendet werden, relativ zueinander variabel sind.

2. Vorrichtung nach Anspruch 1, dadurch gekennzeichnet, daß die Richtungen der Abtaststrahlen bestimmte, vorzugsweise zwei Winkelwerte zur Vertikalen aufweisen können.

3. Vorrichtung nach Anspruch 1 oder 2, dadurch gekennzeichnet, daß eine Stelleinrichtung (69) vorgesehen ist, die bewirkt, daß die Sensoren (66, 67, 68) in einer ersten Position benachbarte, nur teilweise überlappende Euterteile und in einer zweiten Position im wesentlichen vollständig überlappende Euterteile abtasten.

4. Vorrichtung nach Anspruch 3, dadurch gekennzeichnet, daß eine Steuereinrichtung zur Einstellung der Sensoren (66, 67, 68) zusammen mit einem Zitzenbecher (40) vorgesehen ist, um den Zitzenbecher (40) bezüglich einer in der ersten Position festgestellten Zitze in eine Position einzustellen, in der er im wesentlichen geradlinig unter der örtlichen Position der Zitze angeordnet ist, die von den Sensoren (66, 67, 68) in der zweiten Position bestimmt ist.

5. Vorrichtung nach einem der vorhergehenden Ansprüche, dadurch gekennzeichnet, daß die Abtaststrahlen der Sensoren (66, 67, 68) in der ersten Position im wesentlichen vertikal und vorzugsweise parallel gerichtet sind und in der zweiten Position konvergieren.

6. Vorrichtung nach einem der vorhergehenden Ansprüche, dadurch gekennzeichnet, daß die Sensoren (66, 67, 68) in der Betriebsstellung in einer horizontalen Ebene und vorzugsweise symmetrisch um einen anzuschließenden Zitzenbecher (40) verteilt angeordnet sind.

7. Vorrichtung nach einem der vorhergehenden Ansprüche, dadurch gekennzeichnet, daß mindestens drei Sensoren (66, 67, 68) vorgesehen sind.

8. Vorrichtung nach einem der vorhergehenden Ansprüche, dadurch gekennzeichnet, daß jeder Sensor (66, 67, 68) als Sender ausgebildet ist.

9. Vorrichtung nach Anspruch 8, dadurch gekennzeichnet, daß die Sensoren (66, 67, 68) impulsmodulierte Ultraschall-Abtastsignale aussenden, die relativ zueinander zeitverschoben sind.

10. Vorrichtung nach einem der vorhergehenden Ansprüche, dadurch gekennzeichnet, daß eine Sensor-Trageinheit (60) vorgesehen ist, die für jeden Sensor (66, 67, 68) ein Gehäuse (65) aufweist, in dem der Sensor kippbar ist.

11. Vorrichtung nach Anspruch 10, dadurch gekennzeichnet, daß an der Sensor-Trageinheit (60) eine Stelleinrichtung (69) vorgesehen ist, die bewirkt, daß die Sensoren in einer ersten Position benachbarte, nur teilweise überlappende Euterteile und in einer zweiten Position im wesentlichen vollständig überlappende Euterteile abtasten.

12. Vorrichtung nach Anspruch 10 oder 11, dadurch gekennzeichnet, daß die Sensor-Trageinheit (60) Bestandteil eines Roboterarmes (7) oder an ihm starr befestigt ist.

13. Vorrichtung zum Melken eines Tieres nach einem der Ansprüche 1 bis 9, dadurch gekennzeichnet, daß die Sensoren (66, 67, 68) kippbar in einem Gehäuse (65) angeordnet sind, das starr mit einem Roboterarm (7) verbunden ist.

14. Vorrichtung nach Anspruch 12 oder 13, dadurch gekennzeichnet, daß die aufeinanderfolgend an die individuellen Zitzen des Tiereuters anzulegenden Zitzenbecher (40) in einem Halter (41) vorgesehen sind, der in bezug auf den Roboterarm (7) drehbar ist.

15. Vorrichtung nach Anspruch 10 oder 12, dadurch gekennzeichnet, daß die Sensor-Trageinheit (60) in bezug auf den Roboterarm (7) drehbar angeordnet ist.

16. Vorrichtung nach Anspruch 14, dadurch gekennzeichnet, daß die aufeinanderfolgend an die individuellen Zitzen des Tiereuters anzulegenden Zitzenbecher (40) in einem Halter (41) angeordnet sind, der eine integrale Einheit mit dem Roboterarm (7) bildet oder an ihm starr befestigt ist.

17. Vorrichtung nach Anspruch 14 oder 16, dadurch gekennzeichnet, daß jeder Zitzenbecher (40) mit dem Roboterarm (7) oder dem Halter (41) durch ein flexibles Verbindungsglied (42) wie einen Draht oder ein Seil verbunden ist, das beispielsweise aus Kunststoff und/ oder Metall besteht, und das zur Herstellung einer flexiblen Verbindung zwischen dem Roboterarm (7) bzw. dem Halter (41) und dem betreffenden Zitzenbecher (40) während des Melkvorganges sowie zum Aufwärtsziehen des Zitzenbechers (40) zum Halter geeignet ist.

## Revendications

1. Dispositif pour traire un animal (1), ce dispositif comprenant des moyens pour déterminer la position d'un trayon du pis de l'animal dans le but de relier une ventouse de traite (40) à celui-ci, ces moyens comprenant une unité de captage pour déterminer la distance jusqu'au pis de l'animal à partir d'un emplacement sous le trayon, **caractérisé** en ce que l'unité de captage comprend des capteurs individuels (66, 67, 68), les directions des faisceaux de balayage transmis par les capteurs individuels (66, 67, 68) étant variables, les unes par rapport aux autres.

2. Dispositif selon la revendication 1, caractérisé en ce que les directions des faisceaux de balayage peuvent prendre des valeurs angulaires discrètes, de préférence au nombre de deux, par rapport à une verticale.

3. Dispositif selon la revendication 1 ou 2, caractérisé en ce qu'il est prévu des moyens de réglage (69) qui, dans une première position, font que les capteurs (66, 67, 68) balayent des parties contiguës du pis qui empiètent les unes sur les autres, pas plus que partiellement, et, dans une deuxième position, des parties du pis qui empiètent substantiellement les unes sur les autres.

4. Dispositif selon la revendication 3, caractérisé en ce qu'il est prévu des moyens de commande pour ajuster les capteurs (66, 67, 68), ensemble avec une ventouse de traite (40) destinée à un trayon détecté dans la première position, vers une position où la ventouse de traite (40) est située sensiblement tout droit sous l'emplacement du trayon déterminé par les capteurs (66, 67, 68) dans la deuxième position.

5. Dispositif selon l'une quelconque des revendications précédentes, caractérisé en ce que les faisceaux de balayage des capteurs (66, 67, 68) s'étendent sensiblement, en étant de préférence parallèles, dans une direction verticale vers le haut dans leur première position, et en ce que les faisceaux de balayage des capteurs (66, 67, 68) sont convergents entre eux dans leur deuxième position.

6. Dispositif selon l'une quelconque des revendications précédentes, caractérisé en ce que, dans l'état de fonctionnement, les capteurs (66, 67, 68) sont positionnés dans un plan horizontal et, de préférence, symétriquement autour d'une ventouse de traite (40) qu'il s'agit de brancher.

7. Dispositif selon l'une quelconque des revendications précédentes, caractérisé en ce qu'il est prévu au moins trois capteurs (66, 67, 68).

8. Dispositif selon l'une quelconque des revendications précédentes, caractérisé en ce que chacun des capteurs (66, 67, 68) consiste en un émetteur-récepteur.

9. Dispositif selon la revendication 8, caractérisé en ce que les capteurs (66, 67, 68) transmettent des signaux ultrasoniques de balayage à modulation par impulsions, qui sont déphasés temporellement entre eux.

10. Dispositif selon l'une quelconque des revendications précédentes, caractérisé en ce qu'il est prévu une unité (60) portant les capteurs, comprenant un boîtier pour chaque capteur (66, 67, 68), dans lequel boîtier (65) le capteur correspondant est disposé en étant capable de basculer.

11. Dispositif selon la revendication 10, caractérisé en ce qu'il est prévu, sur l'unité (60) portant les capteurs, des moyens de réglage (69) qui, dans une première position, font que les capteurs (66, 67, 68) balayent des parties du pis contiguës, ne se recouvrant pas plus que partiellement et, dans une deuxième position, des parties du pis qui se recouvrent substantiellement.

12. Dispositif selon la revendication 10 ou 11, caractérisé en ce que l'unité (60) portant les capteurs fait partie d'un bras (7) d'un robot, ou est reliée rigidement audit bras.

13. Dispositif pour traire un animal, selon l'une quelconque des revendications 1 à 9, caractérisé en ce que les capteurs (66, 67, 68) sont montés basculants dans un boîtier (65) qui est relié rigidement à un bras (7) d'un robot.

14. Dispositif selon la revendication 12 ou 13, caractérisé en ce que les ventouses de traite (40) qu'il y a lieu de relier séquentiellement aux trayons individuels du pis de l'animal sont prévues dans un support (41) qui est monté rotatif par rapport au bras (7) d'un robot.

15. Dispositif selon la revendication 10 ou 12, caractérisé en ce que l'unité (60) portant les capteurs est montée rotative par rapport au bras (7) d'un robot.

16. Dispositif selon la revendication 14, caractérisé en ce que les ventouses de traite (40) qu'il y a lieu de relier séquentiellement aux trayons individuels du pis de l'animal sont situées dans un support (41) qui forme un ensemble intégral avec le bras (7) d'un robot, ou est relié rigidement à ce bras.

17. Dispositif selon la revendication 14 ou 16, caractérisé en ce que chacune des ventouses de traite (40) est reliée au bras (7) d'un robot ou au support (41) par un organe flexible de liaison (42) tel qu'un fil métallique ou une corde, par exemple en résine synthétique et/ou en métal, qui est capable de former une liaison flexible entre le bras (7) d'un robot et le support (41), respectivement, et la ventouse de traite (40) correspondante au cours de la traite, et qui est capable de tirer la ventouse de traite (40) vers le haut en direction du support.

FIG.1

FIG.2

FIG. 3

FIG. 4

FIG.5

FIG.6

FIG.7